# EUROPEAN PATENT SPECIFICATION

(11) **EP 1 197 149 B1**
(45) Date of publication and mention of the grant of the patent: **21.06.2006**
(21) Application number: 01123300.4
(22) Date of filing: 05.10.2001
(51) Int. Cl.: A21B 3/13

(54) **Flexible mould for confectionery, bread-making and similar, with support and stiffening element of the outer edge**
Flexible Form zur Backwaren- und Brotherstellung mit aussenrandseitig angeordnetem Versteifungs- und Trägerelement
Moule flexible, à élément support et raidisseur périphérique, pour préparer des produits de confiserie et de pain

(30) Priority: 18.10.2000 IT MI000590 U
(43) Date of publication of application: 17.04.2002
(73) Proprietor: SILITAL S.p.A., Vignate (Milano) (IT); TEFAL S.A., 74156 Rumilly Cedex (FR)
(72) Inventor: Meroni, Bruno, 20075 Lodi (IT)
(74) Representative: Pichat, Thierry

(56) References cited:
- EP-A1- 1 132 000
- GB-A- 305 833
- GB-A- 1 159 021
- US-A- 2 237 102
- US-A- 2 241 781

## Description

This invention relates to a flexible mould made of silicone for confectionery, bread-making or similar, particularly suited to the use both in traditional ovens and microwave ovens, consisting of a tray provided, on the upper side, with an edge which extends outwardly.

In FR-A-2 786 667 is disclosed a flexible mould for confectionery and bread-making, comprising a foodgrade silicone tray including an outwards projecting silicone edge provided with a reinforcement, to give an improved mechanical resistance.

In EP-A-1 132 000, which is an intermediate document, is described such a flexible mould in which the reinforcement provided on the outwards projecting silicone edge of a foodgrade silicone tray is added to said silicone edge, to give said improved mechanical resistance.

In the invention, the tray provided, on the upper side, with said edge which extends outwardly, is equipped at said edge with a support and stiffening element, preferably consisting of a metallic wire dippen in the silicone or of platic or metallic frame partially co-stamped at sight, or manually inserted into a corresponding seat provided in the edge.

This feature considerably improves the handling of the tray, especially when it contains very liquid products, keeping unchanged those flexibility features that make easier to take fragile contents out of the oven and to deform and flatten it in order to store it into a reduced space.

As it is known, some of the moulds for confectionery and bread-making are made of rigid material, such as for example metal like aluminium, or refractory materials such as ceramic or vitreous material, the latter used in particular in microwave ovens.

The rigid moulds present several disadvantages, from the difficulty to take the product out of the mould without breaking it, to unsuitable dimensions when the trays must be stored.

These disadvantages can be overcome by means of flexible trays made of fabric of proper fibres coated by a synthetic material such as silicone.

But also these trays present several disadvantages due to the difficulty to duly shape an unstretchable material such as the fabric, to obtain a tray with the required deepness.

With the mould of this invention, it is easier to take the product out of the mould, thanks to the elasticity and the flexibility of the material and it is likewise possible to store the moulds into a reduced space, thanks to the deformability of said moulds.

These known moulds include a duly shaped tray, provided, on the upper side, with an edge, always of silicone, which can extend outwards.

This edge allows to easily grip the tray and take out the product.

The silicone moulds represent an innovative product which can be perfected.

It was noted that the considerable flexibility and elasticity of the material creates some difficulties when there is the need to handle the moulds containing a product, especially if such product is very liquid.

Under the effect of the weight of the product the mould very flexible, tends to deform and if it is lifted by the edge, as usual, there is the risk to split part of the product.

To remove such disadvantage this invention proposes a silicone mould characterised in that the reinforcement which is added to said silicone edge, to give the improved mechanical resistance, includes a support member.

Such a support and stiffening member, or element, is able to give the mould the resistance required to carry the weight of the product without being deformed, keeping the flexibility features which allow to guarantee other advantages listed above.

The mould according to the invention is defined by the characterising portion of claim 1 in particular the embodiment improves the handling of the product and increasing its usefulness and practicalness of use.

This invention will be described in details, by way of example without any limitation thereto, with reference to the attached figures, in which:

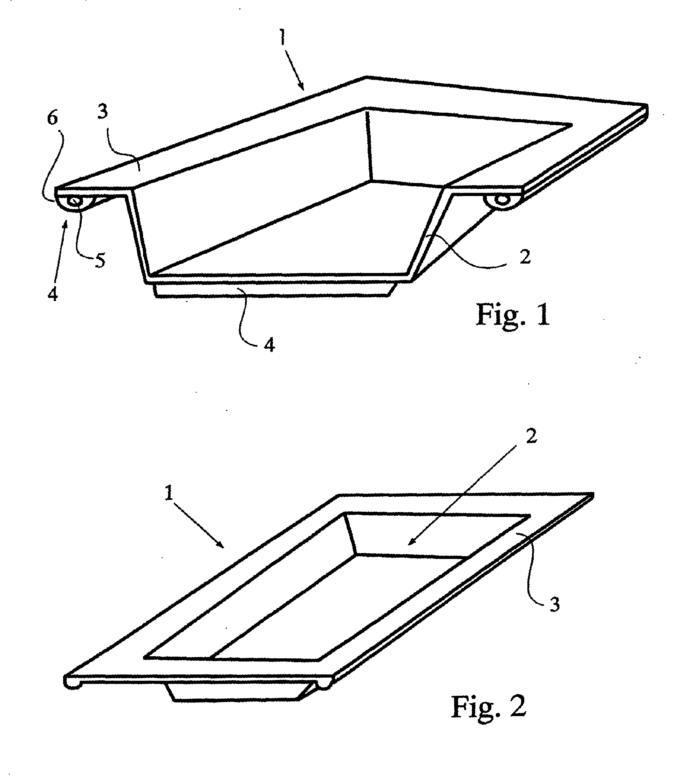

- figure 1 represents the section of a mould according to the invention; figure 2 is the perspective view of the mould of figure 1;
- figures 3 and 4 are perspective views, in section, of further forms of execution of said idea of solution.

With reference to the attached figures, 1 indicates, in its whole, a mould according to the invention, essentially consisting of a tray 2 in which the product to be cooked or heated is inserted and that is provided, on the upper side, with an edge 3 essentially consisting of a wing projecting outwards.

Both the tray 2 and the wing 3 are completely made of silicone.

The silicone is a material able to resist to the temperatures of the oven and turned out to be suitable to this aim thanks to its resistance and flexibility features.

Peculiarity of the invention is to provide, near the perimetral area of the edge or wing 3, a support indicated with 4, essentially consisting of a metallic element 5, preferably a metallic wire such as steel the like, dipped into a silicone coating 6.

The fact of providing the metallic wire dipped into the silicone, allows to use the mould even in a microwave oven.

The stiffening wire will have such dimensions as to allow the mould not to bend under the strain of the content, but such as to allow in any case a sufficient flexibility of the wings 3 and of the entire tray body.

The material can be steel or, in any case, other suitable plastic material. The stiffening element 5 can be directly incorporated into the mould during the injection of the silicone material, or, if necessary, it may also be applied afterwards, duly inserted into seat provided in the silicone.

Through this solution the mould may be easily handled, gripping it by the edges, even when it contains a liquid product, because the resistance of the support element 5 allows the mould to keep its shape without bending under the strain of the content. The silicone flexibility will always allow to easily take the product out, to press the mould and to store it taking up a minimum space.

A skilled in the art may make changes and different versions that must be considered included within the competence of this invention.

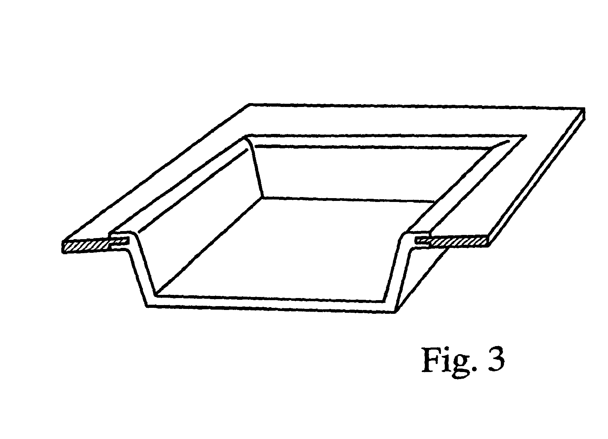

In particular, in lieu of the metallic support element, one can provide a rigid plastic frame co-stamped with the silicon edge or taking the place of the latter, and which is applied for example by pressure, to the mould body, as shown in figure 3.

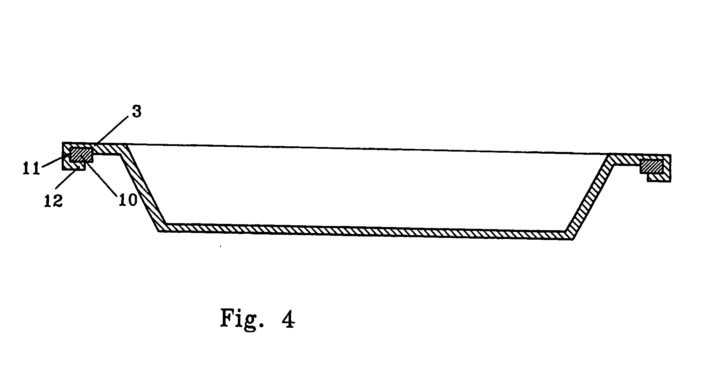

A further preferrend embodiment of the invention provides for a reinforcing element consisting of a frame 10 (fig. 4) made of rigid or semirigid plastic material, which is inserted into a corresponding seat 11 made in the flexible edge 12 of the mould.

Preferably the frame 10 is inserted into a seat provided at the lower surface of the edge.

The outer part 12 of the edge overlaps at least part-of the frame 10, which is so held in place.

## Claims

1. Flexible mould for confectionery and bread-making, comprising a silicone tray (2) and a support and stiffening element (5, 10), said silicone tray (2) including, at its upper side, an outwards projecting edge (3, 12) allowing an easy grip of the mould, **characterised in that** said support and stiffening element (5, 10) is provided near the peripheral area of the edge (3, 12), thus allowing the mould to keep its shape without bending under the strain of the content and to keep its flexibility for easily taking the product out of the mould.

2. Flexible mould according to claim 1, **characterised in that** said support and stiffening element is in a metallic or a plastic material.

3. Flexible mould according to claim 2, **characterised in that** the support and stiffening element is dipped into silicone.

4. Flexible mould according to claim 3, **characterised in that** said support and stiffening element is formed by a wire (5).

5. Flexible mould according to claim 1 or 2, **characterised in that** said support and stiffening element is formed by a frame (10).

6. Flexible mould according to claim 5, **characterised in that** said frame (10), being in a rigid plastic material, is co-stamped with the edge (3) made of silicone.

7. Flexible mould according to claim 5, **characterised in that** said frame (10), being in a rigid plastic material, is applied to the silicone tray (2) for taking the place of the edge.

8. Flexible mould according to claim 5, **characterised in that** said frame (10) is inserted into a corresponding seat (11) provided in the edge (12).

9. Flexible mould according to claim 8, **characterised in that** the corresponding seat (11) is provided in the lower part of the edge (12) and the outer part of the edge (12) overlaps at least part of said frame (10).

## Patentansprüche

1. Flexible Form zur Süßwaren- und Brot-Herstellung, umfassend eine Silikon-Wanne (2) und ein Stütz- und Versteifungselement (5, 10), wobei die Silikon-Wanne (2) an ihrer oberen Seite einen nach außen vorspringenden Rand (3, 12) aufweist, der ein einfaches Greifen der Form ermöglicht, **dadurch gekennzeichnet, dass** das Stütz- und Versteifungselement (5, 10) nahe dem peripheren Bereich des Rands (3, 12) vorgesehen ist, was es der Form gestattet, ohne sich unter der Last des Inhalts zu biegen ihre Gestalt zu behalten und ihre Flexibilität zum einfachen Herausnehmen des Produkts aus der Form zu behalten.

2. Flexible Form nach Anspruch 1, **dadurch gekennzeichnet, dass** sich das Stütz- und Versteifungselement in einem Metall- oder einem Kunststoff-Material befindet.

3. Flexible Form nach Anspruch 2, **dadurch gekennzeichnet, dass** das Stütz- und Versteifungselement in Silikon getaucht ist.

4. Flexible Form nach Anspruch 3, **dadurch gekennzeichnet, dass** das Stütz- und Versteifungselement durch einen Draht (5) gebildet ist.

5. Flexible Form nach Anspruch 1 oder 2, **dadurch gekennzeichnet, dass** das Stütz- und Versteifungselement durch einen Rahmen (10) gebildet ist.

6. Flexible Form nach Anspruch 5, **dadurch gekennzeichnet, dass** der Rahmen (10), der sich in einem steifen Kunststoff-Material befindet, mit dem aus Silikon bestehenden Rand (3) gemeinsam geprägt wird.

7. Flexible Form nach Anspruch 5, **dadurch gekennzeichnet, dass** der Rahmen (10), der sich in einem steifen Kunststoff-Material befindet, an die Silikon-Wanne (2) angebracht ist, um die Stelle des Randes einzunehmen.

8. Flexible Form nach Anspruch 5, **dadurch gekennzeichnet, dass** der Rahmen (10) in eine entsprechende Aufnahme (11) eingeführt ist, die in dem Rand (12) vorgesehen ist.

9. Flexible Form nach Anspruch 8, **dadurch gekennzeichnet, dass** die entsprechende Aufnahme (11) in dem unteren Abschnitt des Randes (12) vorgesehen ist und der äußere Abschnitt des Randes (12) mindestens einen Abschnitt des Rahmens (10) übergreift.

## Revendications

1. Moule flexible pour la pâtisserie et la fabrication de pain comprenant un récipient en silicone (2) et un élément support et raidisseur (5, 10), ledit récipient en silicone (2) comprenant, au niveau de son côté supérieur, un bord se projetant vers l'extérieur (3, 12) permettant d'attraper facilement le moule, **caractérisé en ce que** ledit élément support et raidisseur (5, 10) est prévu près de la zone périphérique du bord (3, 12), permettant ainsi au moule de garder sa forme sans se plier sous la contrainte de son contenu et de garder sa flexibilité pour permettre de sortir facilement le produit hors du moule.

2. Moule flexible selon la revendication 1, **caractérisé en ce que** ledit élément support et raidisseur est en un matériau métallique ou plastique.

3. Moule flexible selon la revendication 2, **caractérisé en ce que** l'élément support et raidisseur est noyé dans la silicone.

4. Moule flexible selon la revendication 3, **caractérisé en ce que** ledit élément support et raidisseur est formé par un fil (5).

5. Moule flexible selon la revendication 1 ou 2, **caractérisé en ce que** ledit élément support et raidisseur est formé par un cadre (10).

6. Moule flexible selon la revendication 5, **caractérisé en ce que** ledit cadre (10), qui est en un matériau plastique rigide, est co-matricé avec le bord (3) fait en silicone.

7. Moule flexible selon la revendication 5, **caractérisé en ce que** ledit cadre (10), qui est en un matériau plastique rigide, est rapporté au récipient en silicone (2) pour prendre la place du bord.

8. Moule flexible selon la revendication 5, **caractérisé en ce que** ledit cadre (10) est inséré dans un logement correspondant (11) prévu dans le bord (12).

9. Moule flexible selon la revendication 8, **caractérisé en ce que** ledit logement correspondant (11) est prévu en partie inférieure du bord (12) et la partie extérieure dudit bord (12) recouvre au moins une partie dudit cadre (10).
